(19) **Europäisches Patentamt / European Patent Office / Office européen des brevets**

(11) **EP 3 895 976 B1**

(12) # EUROPEAN PATENT SPECIFICATION

(45) Date of publication and mention
of the grant of the patent:
**27.08.2025 Bulletin 2025/35**

(21) Application number: **19940170.4**

(22) Date of filing: **19.11.2019**

(51) International Patent Classification (IPC):
**B63B 35/44** (2006.01)  **F03D 13/25** (2016.01)
**F03B 13/14** (2006.01)  **B63B 1/00** (2006.01)
**B63B 79/10** (2020.01)

(52) Cooperative Patent Classification (CPC):
**B63B 1/041; B63B 79/10; F03B 13/14;**
B63B 2021/008; B63B 2035/446; B63B 2035/4466;
B63B 2039/067; B63B 2241/06; B63B 2241/08;
F03D 13/25; F05B 2240/93; F05B 2240/95;
F05B 2250/72; Y02E 10/30; Y02E 10/72;    (Cont.)

(86) International application number:
**PCT/ES2019/070788**

(87) International publication number:
**WO 2021/048450 (18.03.2021 Gazette 2021/11)**

(54) **FLOATING PLATFORM FOR SUPPORTING GENERATORS OF WIND POWER AND/OR WAVE POWER AND/OR MARINE CURRENT POWER**

SCHWIMMENDE PLATTFORM ZUR UNTERSTÜTZUNG VON GENERATOREN FÜR WINDKRAFT UND/ODER WELLENKRAFT UND/ODER MEERESSTRÖMUNG

PLATEFORME FLOTTANTE POUR SUPPORTER DES GÉNÉRATEURS D'ÉNERGIE PROVENANT DU VENT ET/OU DES VAGUES ET/OU DES COURANTS MARINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietors:
• **SOCIEDAD DE CALDERERIA COALCA, S.A.**
**28810 Villalbilla (Madrid) (ES)**
• **Martínez de Azcoitia Fernández, Manuel**
**33204 Gijón (ES)**

(72) Inventor: **MARTÍNEZ DE AZCOITIA FERNÁNDEZ, Manuel**
**33204 Gijón (ES)**

(74) Representative: **López Camba, Emilia**
**SILEX IP**
**Glorieta Rubén Darío, 4**
**28010 Madrid (ES)**

(56) References cited:
| | |
|---|---|
| EP-A1- 3 196 114 | WO-A1-2013/045465 |
| CN-A- 1 857 961 | CN-A- 101 966 868 |
| CN-A- 109 250 043 | CN-A- 109 278 950 |
| CN-A- 109 278 950 | CN-Y- 201 347 195 |
| ES-A1- 2 650 275 | ES-B1- 2 650 275 |
| FR-A1- 2 970 696 | JP-A- 2013 129 323 |
| US-A- 3 690 283 | US-A- 4 982 681 |
| US-A- 4 982 681 | US-A1- 2012 132 122 |
| US-A1- 2012 291 685 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)
Y02E 10/727; Y02P 70/50

(52) Cooperative Patent Classification (CPC): (Cont.)
Y02E 10/727; Y02P 70/50

## Description

### Object of the invention

The object of the present invention, as stated in the title thereof, is a floating platform for supporting different types of power generators, adopting a generally disc-shaped configuration with a circular or polygonal perimeter, designed in such a way that it collects the wind, ocean current and wave energy in a substantially more profitable and sustainable manner than those existing to date, and without the floating platform and its equipment overturning or suffering damage.

The present invention is characterised in its, painstaking configuration and design, particularly its dimensions, due to which the platform is the optimal result regarding its dimensions and costs; likewise, to its hydrodynamic properties, thanks to which its stability is substantially improved.

Therefore, the present invention is included within the field of means of supporting and installing wind, wave, and ocean current energy generators on the ocean surface.

### Background of the invention

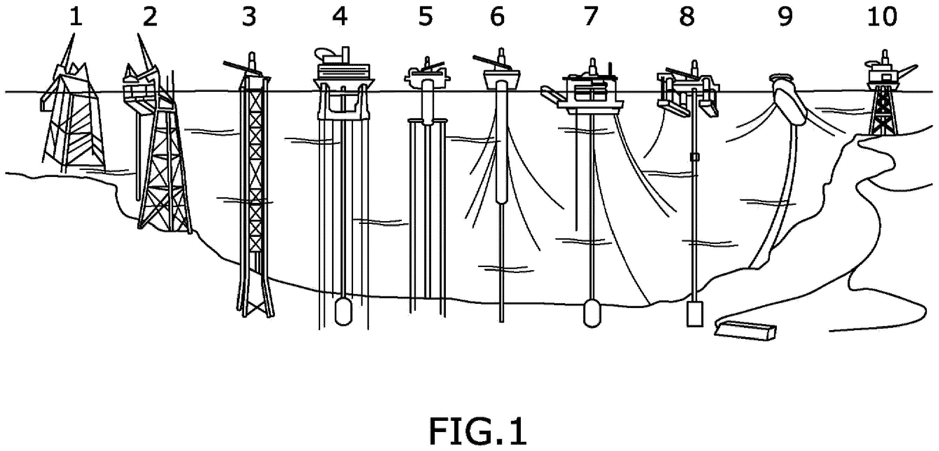

The different methods of supporting and stabilising marine wind turbine generators may be seen in figure 1 wherein the following are portrayed:

(1), (2) Conventional fixed platforms;
(3) Jack-up tower platforms;
(4), (5) Tension-leg floating platforms;
(6) Spar platforms;
(7), (8) Semi-submersible platforms;
(9) Platforms on drill ships;
(10) Platforms supported on underwater shelves and linked to extraction facilities on the ocean floor.

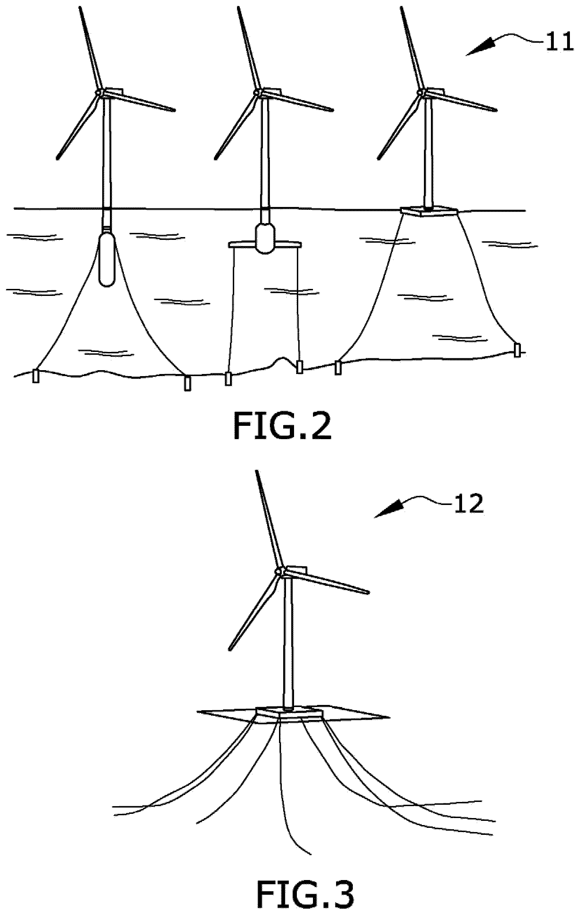

Figure 2 portrays different mooring systems of the "spar" type, tension-leg semi-submersibles (11), while figure 3 portrays a platform of the "Barge" type (12) (a group to which the present invention belongs).

Regarding these, the well-known American technician Jason Jonkman states:

- The "spar" type has considerable static angles of inclination which require special mechanical projects,
- The "barge" type sustains greater movements of the nacelle due to the combination of wind and waves; a suitable project for the turbines is therefore necessary, which will be more costly, and the movements must be smoothed out with alternative solutions. However, when the swell diminishes, the loads are considerably reduced,
- The risk of "slamming" should also be borne in mind.
- The Spar type undergoes less movement; however, non-linear forces appear, which require more advanced tools,
- The manufacture of these floating systems can be optimised, due to their being mass-produced,
- Controls must be devised in the response of the turbine/platform combination to the random movement of the waves, such as a smart variation in the pitch of the turbine blades to reduce the fore-aft sway,

However, these platforms are complex in their execution and assembly, and also very costly, restricting considerably their scope of application and their future availability.

In the state-of-the-art, the following documents are known:

- US 4 982 681 A. A disc-shaped marine structure fabricated of steel and/or concrete, able to support useful loads as great as 125,000 tonnes, is tethered to float stably in very deep water, with only minor response motions to waves of large amplitude period.
- CN 109 278 950 discloses a hybrid floating platform of offshore wind power generation and fishery net cage cultivation and relates to the field of wind power utilization.
- EP 3 196 114 A1 discloses a floating wind power generation device comprising: a main buoyant body which has buoyancy, so as to float on the sea, and has a space portion provided in the centre; an auxiliary buoyant body which has buoyancy and is connected to the main buoyancy and is connected to the main buoyant body by being inserted into the space portion of the main buoyant body; a plurality of wind power generators which are vertically provided on top of the auxiliary buoyant body and generate power; a location control means which is connected to the main buoyant body and controls the location of the main buoyant body; and an oscillation inhibiting means which is connected to the main buoyant body and enables the main buoyant body to maintain an equilibrium state by absorbing the sea waves.

The document CN 1 857 961 A discloses a shake-reducing device for marine float that includes one turn of shake-reducing plates with upwards L-shaped outer edge in the bottom of float, one group of supporting plates connecting the shake-reducing plate to the float and set in some interval, one group of flow disturbing ports in the side near the float of the shake-reducing plates, and 1-3 turns of stiffening L bars in the far side of the shake-reducing plates. The present invention can improve the marine environment without lowering the FPSO or FSO functions and may be used in various kinds of marine floats.

The document CN 201 347 195 Y discloses an anti-rolling device of an ocean floating body, which comprises at least one group of anti-rolling components, wherein each group of the components comprises an anti-rolling box body and supporting plates; the anti-rolling box body surrounds the ocean floating body, and is formed by an upper anti-rolling plate, a lower anti-rolling plate and a connecting plate, wherein turbulence holes are arranged on the upper and lower anti-rolling plates; the supporting plates are arranged between the upper and lower anti-rolling plates; and the anti-rolling box body, the supporting plate and the ocean floating body are welded into a whole body. The number of the anti-rolling component is preferably to be two to three groups. In the same group of the anti-rolling components, the space between the adjacent supporting plates is 1.5 to 2.5m, the horizontal width of the upper and the lower anti-rolling plates of the anti-rolling box body is 2 to 4m, and the space between the adjacent groups is 3 to 6m. At least one lightening hole is arranged on each supporting plate. The device can realize the gradually reduction of the current damping by combining and using the anti-rolling components, thereby effectively reducing the amplitude of horizontal rolling, fluctuating and the heave motion of the ocean floating body, greatly improving the working environment of the workers and mechanical equipment on the ocean floating body, and the anti-rolling device has the advantages of lowered cost, convenient process and simple realization, and can be widely applied on various ocean floating body.

The document US 2012/291685 A1 discloses an offshore structure having a vertically symmetric hull, an upper vertical wall, an upper inwardly tapered wall disposed below the upper vertical wall, a lower outwardly tapered wall disposed below the upper sloped wall, and a lower vertical wall disposed below the lower sloped wall. The upper and lower sloped walls produce significant heave damping in response to heavy wave action. A heavy slurry of hematite and water ballast is added to the lower and outermost portions of the hull to lower the center of gravity below the center of buoyancy. The offshore structure provides one or more movable hawser connections that allow a tanker vessel to moor directly to the offshore structure during offloading rather than mooring to a separate buoy at some distance from the offshore storage structure. The movable hawser connection includes an arcuate rail with a movable trolley that provides a hawser connection point that allows vessel weathervane.

The US 2012/132122 A1 discloses an offshore depot having a vertically symmetric hull, an upper inwardly tapered wall and a lower outwardly tapered wall that produce significant heave damping in response to heavy wave action. Ballast is added to the lower and outermost portions of the hull to lower the center of gravity below the center of buoyancy. The offshore depot includes a tunnel formed within or through the hull at the waterline that provides a sheltered area inside the hull for safe and easy launching/docking of boats and embarkation/debarkation of personnel. When the watertight tunnel doors are all shut, the tunnel may be drained to create a dry dock environment within the hull. The offshore depot includes berthing and dinning accommodations, medical facilities, workshops, machine shops, a heliport, and the like.

Finally, document FR 2 970 696 A1 relates to the field of floating bodies, and more particularly to an annular floating body (1) comprising a central opening (2) in a well, configured such that, in water, with a swell of a period substantially equal to one own period of the floating body (1) heave, vertical forces exerted on the floating body (1) by a body of water oscillating in the central opening (2) in phase opposition with respect to the swell, compensate at least partially vertical forces exerted on the floating body (1) by the swell, and a method of extinguishing at least partially a heave movement of the floating body (1) at a specific period of the floating body (1).

The prior art reveals patent ES2650275 B1, which discloses a multi-purpose disc-shaped floating platform for supporting marine wind turbine generators and other marine energy generators, which claims to be a floating platform that supports wind turbine generators or generators driven by waves and/or ocean currents or the tides, where the platform has a height-to-diameter ratio of less than 5%, stating that its weight is considerably less than that of other platforms.

Although said platform fulfils the requirement sought, it nonetheless presents several aspects which clearly leave room for improvement. Indeed, on the one hand, with the height-to-diameter ratio of the platform, it must necessarily have a relatively large radius, resulting in greater dimensions, a greater quantity of material and therefore a greater environmental impact, and consequently, significantly high manufacturing, testing and transport costs. Furthermore, additional factors have not been considered, such as the period of the waves, which may cause the platform to enter into resonance and even overturn.

A solid, when disturbed from its resting position, tends to vibrate at certain frequencies, called natural frequencies, when excited. For each natural frequency, the solid acquires a particular shape, called mode shape. Frequency analysis calculates the natural frequencies and the associated mode shapes. When the frequency of the wave-emitting source coincides with the natural frequency of the resonator (the object that oscillates), a condition known as resonance is reached. Resonance is defined as the tendency of a physical system to oscillate with a much higher amplitude at some frequencies. If the platform amplifies its oscillation with lists of 45, 60 degrees or more, said movements might even cause the platform to overturn.

Therefore, the object of the present invention is to overcome the drawbacks stated concerning the floating disc-shaped platform disclosed in ES2650275 B1, fundamentally concerning its excessive size, and therefore costs and associated complexities, likewise the possibility of entering into resonance with the movement of the ocean waves and even overturning, by developing a platform which overcomes the aforementioned drawbacks and which takes into account all the possible factors that come into play in its stability on the ocean surface.

This platform has the characteristics described below the essential nature whereof is described in claim 1.

**Description of the invention**

The object of the present invention is a floating platform for supporting marine power generators of any type and nature, either wind turbine generators, or generators that exploit the movement of the tides or the undulating movement of the waves.

It will be disc-shaped, and its perimeter may be circular or multiple-sided polygonal, this choice depending solely on the ease of construction.

It will be located by means of anchoring, and due to it being totally regular, it will present an identical surface to the waves, wherever they come from. However, the nacelle (where the wind power generator is housed) will swivel, to absorb the energy of the wind, from whichever direction it comes.

The power generators driven by the waves and currents will consist of devices specifically designed for this purpose, with either vertical-shaft rotors (waves) or horizontal-shaft (currents), or other devices which, located on the periphery of the platform at the height of the waterline, enable the collection of the energy foreseen to be performed.

For the design of the platform which is the object of the invention, the following factors, described below, and the inter-relationship between them, have been considered.

- Radius (m),
- Depth (height of the disc) (m),
- Bulwark (non-watertight upper structure acting as a breakwater). Height in metres,
- Keel (non-watertight lower structure like a skirt, which encloses seawater). Height in metres,
- Distance between ocean surface and bulwark (m),
- Draught (the part of the height of the disc that is submerged) (m),
- Weight of the blades, hub and nacelle (MT),
- Weight of the tower (MT),
- Weight of bulwark and keel (MT),
- Weight of the disc (MT) as calculated,
- Volume of the disc, without keel (m3)
- Fixed ballast (MT),
- P = Displacement (MT) (sum of all the weights)
- Inertia of the disc ($\pi * R^4$)/4 (m4),
- (Ig), Inertia of the assembly, as a sum of all the inertias with respect to the centre of gravity,
- Total weight of the platform (MT) (sum of the weight of the disc plus the fixed ballast).
- Angle of the wave expressed in radians, which is equal to the arc tag of the wave height divided by half the length of the wave.
- Angle of list (maximum list) in degrees and radians.

For the stability study, the following have been considered: the action of the wind on the generator blades, the swell against the assembly, and the inter-relationship between the inertias, the centres of gravity, the flotation inertia, the metacentric height, the centre of buoyancy, etc. all given in the following expressions:

Thrust heeling lever = distance from the centre of gravity of the generator - distance from the centre of gravity of the assembly $\times$ thrust on the generator shaft (MT $\times$ m),

Righting lever = Displacement P $\times$ (distance from the metacentre - distance from the centre of gravity of the assembly $\times$ MT $\times$ m), expressed as P $\times$ (r - a).

T = is the period, expressed in seconds.

It is related to the mass (Ig) and the stability (P x (r-a)) by the expression:

$$T = k * 2 * \pi *[Ig / P *(r - a)*g]^{1/2}$$

K = being the coefficient established by various hydrodynamic tests which includes the additional inertia due to the mass of water associated with the floater in question, ship, or platform, when it oscillates in the water.

Given that the period of the waves varies between 8 and 20 seconds, it has been adjudged that, at least, the period of these platforms must be greater than 15 seconds, as this is in the region of 50% more than the smallest period of the swell and is the proportion that is considered minimal to prevent phenomena of resonance.

All the above formulae and the parameters taken into account enable the design of an approximately disc-shaped floating platform that fulfils the conditions sought regarding the smallest size possible and therefore likewise costs and complexities, has an acceptable wind-caused list for the equipment installed, slamming does not occur, as it is "glued" to the ocean surface at all times, and it prevents the possibility of entering into resonance with the ocean wave movements, and thus does not damage the equipment installed and can never overturn.

In order to satisfactorily resolve the aforementioned conditions, stability calculations and a scale model test have been performed, defined by the equality of the Froude's number (which relates the forces of inertia with those of gravity and is represented by the quotient between velocity and the square root of the product of gravity by length) in a model and a prototype (according to the table below) in a hydrodynamic Test Canal with reference OTI 2460, equipped with a suitable anchoring system and using an optical monitoring system (Krypton) with an incident wave sensor, a relative wave sensor, accelerometers, load cells and cameras to film the 18 different regular and irregular surges to which the platform was subjected.

List of dimensions between model and prototype.

| DESCRIPTION | PROTOTYPE | MODEL |
|---|---|---|
| Scale | 1 | 28.57 |
| Radius [m] | 20.000 | 0.700 |
| Depth [m] | 7.620 | 0.267 |
| Draught [m] | 4.140 | 0.145 |
| Displacement [kg] | 5334254 | 223.128 |
| KG [m] | 14.470 | 0.506 |
| GM [m] | 11.750 | 0.411 |
| CDG Inertia Kg*m$^2$] | 5950509757 | 304.909 |
| List angle [°] | 0 | 0 |
| Trim angle [°] | 0 | 0 |

Considering the calculations performed and the subsequent verifications in hydrodynamic tests, the floating platform presents a ratio between the depth or height of the platform and the diameter thereof, excluding the bulwarks and keels, of between 0.06 and 0.35.

In order to verify all the above calculations, a prototype was constructed and subjected to a hydrodynamic test. The first test was a so-called "extinction test", or verification of calculations, and next the 18 different types of swells were produced, from 15 (service) to 3 (extreme or survival), overcoming all of these. The survival swells were none other than the maximum swells that occur in the North Atlantic. The tests have proven the correct sizing of the floater, of its weight and thrust distribution, its inertias, buoyancy, or response to undulating movements, its anchoring system, its vertical and horizontal accelerations, velocities, period, etc.

This test is highly significant, as it is set at the most demanding extreme, but there are many other intermediate states where the proportions may be varied to comply with requirements, and therefore we must work on a group and not a single point.

The dimensions of the platform tested were: 20 m radius, 7.62 m depth, with a bulwark of 2.87 m and a keel of 2.87 m. Draught was 4.14 m. The distance between the waterline and the top of the bulwark: 6.35 m

This survival test was performed without generating power; the list angle caused by the wind is therefore zero.

The fact that the survival test was passed with these dimensions tells us that with the maximum incident wave measured, this being 7.33 m., the height of 6.35 m. was sufficient.

With this datum, the platform was resized for a wind thrust of 6 MW (922 kN), resulting in the following:

- Radius = 20.5 m.
- Depth = 8.36 m., plus bulwark and keel of 3 m. each, sloping at 20° and 45° from the vertical
- Weight of the structure: 831 MT
- Ballast: 3,500 MT
- Weight of the tower and nacelle: 837 MT
- Total weight with ballast: 5,168 MT
- Draught: 3.82 m
- Natural period: 22.23 sec.

The stability tests reveal that, when exploiting the maximum energy from the wind, there is a list of 6°. A list that is produced from the Centre of Gravity of the assembly.

As the height of the incident wave with service (not survival) swell was 6.29 m., the free height from the waterline to the top of the bulwark must be:

$$6.35 - 7.33 - 6.29 = 5.31 \text{ m.}$$

Combining this distance with the 6° list, the new radius of 20.5 m. gives a depth of 8.36 m. plus bulwark and keel of 3 m. each.

The possible ratios would be:

- Without bulwarks or keels: 8.36/41 = 0.203.
  Note: - It would have bulwarks and keels, but the ratio is derived from the depth divided by the diameter or length, not by the depth plus bulwark and keel.
- If we raise the deck to the height of the bulwark and set it vertical: 11.36/41 = 0.277
- If the deck is raised and the lower deck or base is lowered to the keel, setting it vertical: 14.36/41 = 0.350

Conversely, the depth could be reduced, and the height of the keels and bulwarks increased; thus, the ratio could be reduced as deemed appropriate, although this may be unworkable.

Thus, with 0.06, the depth would be 41 x 0.06 = 2.46 m., and the bulwark would be: (14.36-2.46) / 2 = 5.95 m., and the keel also 5.95 m., so the sum of depth + bulwark + keel = 14.36 m.

These dimensions could result in an insufficient structural resistance to the impact of the waves and to undersea movements due to the excessive cantilevered height, although this solution might be chosen for small swells, with keels and bulwarks of a lesser height.

However, a similar sizing might be feasible if the power of the generator is reduced, e.g., from 6 MW to 1 MW.

Therefore, bearing in mind that the proportions are highly variable, depending on:

- The swell where the platform is to be located,
- the more or less intense wind conditions, and
- the power to be absorbed by the generator,

It is considered that the relationship or ratio between the depth or height of the platform and the diameter thereof, this being between 0.06 and 0.35, satisfies the stability requirements that consider all the physical variables that may affect its stability (wind, force of the swell, period of the waves, period of the platform itself, list of the assembly, etc.).

Finally, it must be stated that this platform may be 4.0 or smart, as it features some of the means described below or combinations thereof:

- The rotor blades can alter their pitch according to the intensity of the wind;
- automatic means for the taking on or releasing of seawater ballast to position the tilt of the platform in the direction where the wind is coming from at all times;
- Cathodic protection means by impressed currents to prevent the oxidation of the hull and to maintain the protection throughout the useful life of the platform;
- Means for the monitoring of the tension of the anchor chains for the remote detection of possible faults or maladjustments.
- A weather station.

Unless indicated otherwise, all the technical and scientific elements used in this specification have the meaning usually understood by a person skilled in the art to which this invention belongs. In the practice of this invention, methods, and materials similar or equivalent to those described in the specification may be used.

In the description and claims, the word "comprises" and its variants do not intend to exclude other technical characteristics, additives, components or steps. For persons skilled in the art, other objects, advantages, and characteristics of the invention will be partly inferred from the description and partly from the practice of the invention.

**Explanation of the figures**

In order to complement the description being made herein, and with the objective of better understanding the characteristics of the invention, in accordance with a preferred practical embodiment thereof, said description is accompanied, as an integral part thereof, by a set of drawings where, in an illustrative and non-limiting manner, the following has been represented:

In figure 1, we may see the different methods of anchoring wind turbine generators on the sea according to the prior art.

In figure 2, we may see semi-submersible "spar"-type anchorages according to the prior art.

Figure 3 portrays "barge"-type platforms according to the prior art.

Figure 4 portrays a lateral view of the floating platform wherein different construction aspects are referenced.

Figure 5 portrays additional construction aspects, where the interior of a floating platform may be seen.

Figure 6 portrays a representation of a floating disc module.

**Preferred embodiment of the invention**

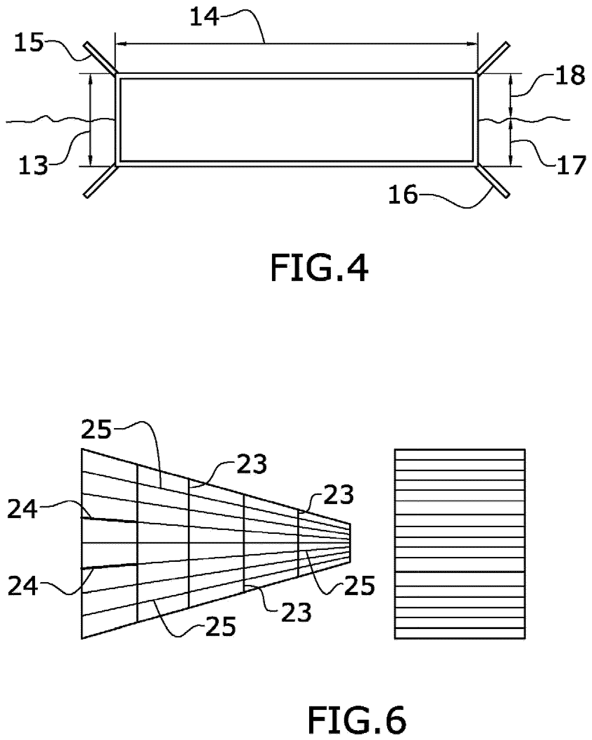

In view of the figures, a preferred embodiment of the proposed invention is described below. In figure 4 we can see a lateral view of the floating platform, showing the depth or height of the platform (13), the diameter (14), the draught (17), the distance between the water surface and the base of the platform, likewise the free distance (18), this being understood to be the distance between the surface of the sea and the upper edge of the platform. Also visible are several additional complementary elements, consisting of sloping keels or skirts (16) that provide stability, and optional sloping bulwarks or profiles (15) which surround the perimeter of the platform and prevent the entry of water to the surface thereof.

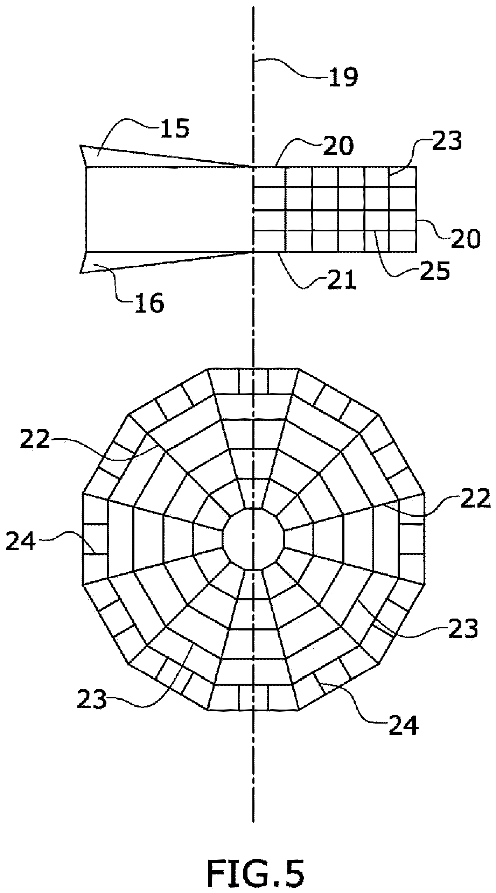

Figure 5 portrays the structure of the floating platform which, as may be seen, consists of a series of carlings (22) disposed radially with regard to a central axis (19), where the carlings (22) are connected by means of a series of stringers (23) to endow the platform with greater structural rigidity; in addition, a series of transversal perimeter reinforcements (24), disposed in the final span of each circular section, where all the aforementioned elements are housed in the internal space defined by an external shell or external sheathing (20) to compensate the external pressure of the sea.

The tower has a series of ribs, in such a way that said element is positioned so that these are in correspondence with the carlings.

In figure 5 and in the detail in figure 6, a series of angular reinforcements or bulb flats (25) may be seen; these are disposed on the interior of the external plates. Said bulb flats (25) on the external sheathing are installed vertically, as are the ribs of ships, while on the decks and base the bulb flats (25) are installed radially in the intermediate space defined by the carlings (22). Their purpose is to reduce the opening and to reduce the thicknesses of the plate.

The platform may be constructed from Steel, Marine Steel A or glass-fibre reinforced polyester (GRP).

By way of an example, for the twelve-sided polygonal platform described above, with a radius of 20.5 m. and a height of 8.36 m., we should proceed as follows:

- Material: marine steel A comprised of sheets, profiles, and bulb flats,
- A totally watertight radial structure, with keels and optional bulwarks; the bulwarks will feature drains or automatic non-return bulwark ports (like those existing in ships) to prevent rainwater or splashes from remaining therein.
- Twelve identical modules will be manufactured, although one of the modules will have two carlings (vertical structure in the direction of the radius) instead of only one, as in the rest; transversal stringers or reinforcements and longitudinal reinforcements at the extremity of the module, more bulb flats at the bases, deck, and sides by way of ribs. All of this covered by the external sheathing.

These modules would be constructed in a workshop, welded with construction procedures and details approved by a Classification Society and with careful preparation of the surfaces for the application of rust-preventive and anti-fouling paints (this last on the external submerged section - underwater body).

The twelve modules would be assembled on the shipyard slipway due to its surface area and its proximity to the sea, locating them with cranes and a construction cradle, observing the construction plan.

Finally, the watertightness tests would be performed, and it would be launched into the sea.

Next, with the platform now floating, the tower and nacelle would be installed, coupling its vertical reinforcements with the carlings of the bulwark, should there be one, or on the deck, exactly in the area where the carlings are located, to endow the assembly with the appropriate structural continuity.

Finally, the assembly would be towed to its definitive offshore location.

This procedure, due to the exclusive nature of the project, saves significant installation costs.

Conversely, the platforms resting on and anchored to the ocean floor, as they do not float, involve high production costs as they require the use of a considerable tonnage of material, and furthermore, the logistics for their transfer and placement are highly complex, as they must be transported in costly vessels especially constructed for the performance of these delicate operations.

On the other hand, floating platforms of the spar type, due to their great height and draught, must be transported lying flat and then erected to the vertical at their final location by auxiliary ships which are also complex and costly.

The floating platform, which is the object of this invention, by floating and having a reduced draught, may be transported by simple towing, with no need to perform any special manoeuvre in its placement. It may be considered a "plug & play" platform, as once disposed on the sea, it is ready for use. This property of installing and operating is highly important for the logistics of this invention in comparison with those existing.

Finally, it should be mentioned that the structure may also be designed straight, with parallel carlings, modifying the connection with the tower in comparison with that described herein.

Having sufficiently described the nature of the present invention, in addition to the manner in which to put it into practice, it is hereby stated that, in its essence, it may be put into practice, as stated herein, in other embodiments that differ in detail from that indicated by way of an example, and to which the protection shall likewise apply, provided that its basic principle is not altered, changed or modified.

**Claims**

1. A floating platform for supporting generators of power derived from the wind and/or the waves and/or ocean currents, comprising an approximately disc-shaped general configuration in which a completely watertight radial structure is defined with a circular or polygonal perimeter, wherein the disc has a height or depth (13) and a diameter (14), **characterised in that** the floating platform presents:
(1.a) a ratio between the platform height or depth (13) and diameter thereof between 0.06 and 0.35; (1.b) a natural period greater than 15 seconds, as this is in the region of 50% more than the smallest period of the swell, and (1.c) a sloping keel (16) acting as a skirt arranged to improve the floating platform behaviour against the swell.

2. A floating platform for supporting generators of power derived from the wind and/or the waves and/or ocean currents, as claimed in claim 1, **characterised in that** the floating platform has an external shell or external sheathing (20) whose internal structure consists of a series of radially-disposed carlings (22), connected by means of a series of stringers (23) to endow the platform with a greater structural rigidity, and in addition, a series of transversal perimeter reinforcements (24), such as angular profiles or bulb flats, which stiffen the external sheet panels.

3. A floating platform for supporting generators of power derived from the wind and/or the waves and/or ocean currents, as claimed in either of the preceding claims, **characterised in that** the floating platform has additional complementary elements, consisting of several bulwarks (15) acting as breakwaters, whose purpose is to improve its behaviour against the swell that may affect the perimeter of the platform.

4. A floating platform for supporting generators of power derived from the wind and/or the waves and/or ocean currents, as claimed in any of the preceding claims, **characterised in that** the platform has a number of power generators driven by the waves and currents coupled to the platform, consisting of devices designed for this purpose, either with vertical-shaft rotors (waves) or horizontal-shaft (currents), or other devices which, located on the periphery of the platform at the height of the waterline, enable the collection of the energy foreseen to be performed.

5. A floating platform for supporting generators of power derived from the wind and/or the waves and/or ocean currents, as claimed in any of the preceding claims, **characterised in that** the platform is constructed from Steel, Marine Steel A or glass-fibre reinforced polyester (GRP).

6. A floating platform for supporting generators of power derived from the wind and/or the waves and/or ocean currents, as claimed in any of the preceding claims, **characterised in that** it has one, or a combination, of the following features:

- Equipment that enables the rotor blades to alter their pitch according to the intensity of the wind;
- Automatic means for the taking on or releasing of seawater ballast to position the tilt of the platform in the direction where the wind is coming from at all times;
- Cathodic protection means by impressed currents to prevent the oxidation of the hull and to maintain the protection throughout the useful life of the platform;
- Means for the monitoring of the tension of the anchor chains for the remote detection of possible faults or maladjustments;
- A weather station.


**Patentansprüche**

1. Schwimmplattform zum Tragen von Generatoren von Strom, der vom Wind und/oder von den Wellen und/oder von Meeresströmen abgeleitet wird, die eine ungefähr scheibenförmige allgemeine Auslegung umfasst, bei der eine völlig wasserdichte Struktur mit einem kreisförmigen oder polygonalen Perimeter definiert ist, wobei die Scheibe eine Höhe oder eine Tiefe (13) und einen Durchmesser (14) aufweist, **dadurch gekennzeichnet, dass** die Schwimmplattform Folgendes präsentiert:

(1.a) ein Verhältnis zwischen der Plattformhöhe oder -tiefe (13) und dem Durchmesser davon zwischen 0,06 und 0,35; (1.b) eine Eigenperiode von mehr als 15 Sekunden, da dies im Bereich von 50 % mehr als der kleinsten Periode des Wellengangs ist, und (1.c) einen abfallenden Kiel (16), der als eine Schürze fungiert, die angeordnet ist, um das Verhalten der Schwimmplattform gegenüber dem Wellengang zu verbessern.

2. Schwimmplattform zum Tragen von Generatoren von Strom, der vom Wind und/oder von den Wellen und/oder von Meeresströmen abgeleitet wird, nach Anspruch 1, **dadurch gekennzeichnet, dass** die Schwimmplattform eine äußere Hülle oder eine äußere Verschalung (20) aufweist, deren innere Struktur aus einer Reihe von radial angebrachten Setzwegern (22) besteht, die mittels einer Reihe von Längsträgern (23) verbunden sind, um der Plattform eine größere strukturelle Steifigkeit zu verleihen, und zusätzlich Querverstärkungen (24) am Perimeter, wie etwa Winkelprofile oder Flachwulstelemente, die die äußeren Blechplatten versteifen.

3. Schwimmplattform zum Tragen von Generatoren von Strom, der vom Wind und/oder von den Wellen und/oder von Meeresströmen abgeleitet wird, nach einem der vorhergehenden Ansprüche, **dadurch gekennzeichnet, dass** die Schwimmplattform zusätzliche komplementäre Elemente aufweist, die aus mehreren Relingen (15) bestehen, die als Wellenbrecher fungieren, deren Zweck darin besteht, ihr Verhalten gegenüber dem Wellengang zu verbessern, der den Perimeter der Plattform beeinträchtigen kann.

4. Schwimmplattform zum Tragen von Generatoren von Strom, der vom Wind und/oder von den Wellen und/oder von Meeresströmen abgeleitet wird, nach einem der vorhergehenden Ansprüche, **dadurch gekennzeichnet, dass** die Plattform eine Anzahl von Stromgeneratoren aufweist, die von den Wellen und Strömungen, die an die Plattform gekoppelt sind, angetrieben werden und aus Vorrichtungen bestehen, die für diesen Zweck konstruiert sind, entweder mit Rotoren mit vertikaler Welle (Wellen) oder horizontaler Welle (Strömungen), oder anderen Vorrichtungen, die sich an der Peripherie der Plattform auf der Höhe der Wasserlinie befinden und die Sammlung der Energie ermöglichen, deren Durchführung vorhergesehen ist.

5. Schwimmplattform zum Tragen von Generatoren von Strom, der vom Wind und/oder von den Wellen und/oder von Meeresströmen abgeleitet wird, nach einem der vorhergehenden Ansprüche, **dadurch gekennzeichnet, dass** die Plattform aus Stahl, Marinestahl A oder aus glasfaserverstärktem Polyester (GRP) konstruiert ist.

6. Schwimmplattform zum Tragen von Generatoren von Strom, der vom Wind und/oder von den Wellen und/oder von Meeresströmen abgeleitet wird, nach einem der vorhergehenden Ansprüche, **dadurch gekennzeichnet, dass** sie ein oder eine Kombination der folgenden Merkmale aufweist:

- eine Ausrüstung, die es den Rotorblättern ermöglicht, ihren Anstellwinkel gemäß der Stärke des Windes zu ändern;
- automatische Mittel zum Aufnehmen oder Freigeben von Meerwasserballast, um die Neigung der Plattform zu allen Zeiten in die Richtung zu positionieren, aus der der Wind kommt;
- kathodische Schutzmittel durch eingedrückte Strömungen, um die Oxidation der Außenhaut zu verhindern und den Schutz der Plattform über deren Nutzungsdauer aufrechtzuerhalten;
- Mittel zum Überwachen der Spannung der Ankerketten für die entfernte Detektion von möglichen Fehlern oder Fehleinstellungen;
- eine Wetterstation.

## Revendications

1. Plate-forme flottante permettant de supporter des générateurs d'énergie provenant du vent et/ou des vagues et/ou des courants océaniques, comprenant une configuration générale approximativement en forme de disque dans laquelle une structure radiale complètement étanche est définie avec un périmètre circulaire ou polygonal, dans laquelle le disque a une hauteur ou une profondeur (13) et un diamètre (14), **caractérisée en ce que** la plate-forme flottante présente :
(1.a) un rapport entre la hauteur ou la profondeur de la plate-forme (13) et le diamètre de celle-ci compris entre 0,06 et 0,35 ; (1.b) une période naturelle supérieure à 15 secondes, celle-ci correspondant à environ 50 % de plus que la plus petite période de la houle, et (1.c) une quille inclinée (16) agissant comme une jupe conçue pour améliorer le comportement de la plate-forme flottante face à la houle.

2. Plate-forme flottante permettant de supporter des générateurs d'énergie provenant du vent et/ou des vagues et/ou des courants océaniques, selon la revendication 1, **caractérisée en ce que** la plate-forme flottante comprend une coque externe ou un revêtement externe (20) dont la structure interne est constituée d'une série de membrures (22) disposées radialement, reliées par une série de lisses (23) pour conférer à la plate-forme une plus grande rigidité structurelle, et en outre, une série de renforts périmétriques transversaux (24), tels que des profils en équerre ou des plats à bourrelet, qui raidissent les panneaux de tôles externes.

3. Plate-forme flottante permettant de supporter des générateurs d'énergie provenant du vent et/ou des vagues et/ou des courants océaniques, selon l'une ou l'autre des revendications précédentes, **caractérisée en ce que** la plate-forme flottante a des éléments complémentaires supplémentaires, constitués de plusieurs œuvres mortes (15) agissant comme brise-lames, ayant pour but d'améliorer son comportement face à la houle susceptible d'affecter le périmètre de la plate-forme.

4. Plate-forme flottante permettant de supporter des générateurs d'énergie provenant du vent et/ou des vagues et/ou des courants océaniques, selon l'une quelconque des revendications précédentes, **caractérisée en ce que** la plate-forme a un certain nombre de générateurs d'énergie entraînés par les vagues et les courants accouplés à la plate-forme, constitués de dispositifs conçus à cet effet, soit avec des rotors à arbre vertical (ondes) ou à arbre horizontal (courants), ou d'autres dispositifs qui, situés sur la périphérie de la plate-forme au niveau de la hauteur de la ligne de flottaison, permettent la réalisation de la collecte de l'énergie prévue.

5. Plate-forme flottante permettant de supporter des générateurs d'énergie provenant du vent et/ou des vagues et/ou des courants océaniques, selon l'une quelconque des revendications précédentes, **caractérisée en ce que** la plate-forme est construite en acier, acier marin A ou polyester renforcé de fibres de verre (GRP).

6. Plate-forme flottante permettant de supporter des générateurs d'énergie provenant du vent et/ou des vagues et/ou des courants océaniques, selon l'une quelconque des revendications précédentes, **caractérisée en ce qu'**elle a un seul, ou une combinaison, des caractéristiques suivantes :

   - Équipement permettant aux pales du rotor de modifier leur pas en fonction de l'intensité du vent ;
   - Moyens automatiques pour la prise ou le rejet de ballast en eau de mer pour positionner l'inclinaison de la plate-forme dans la direction d'où provient le vent en permanence ;
   - Moyens de protection cathodique par courant imposé pour prévenir l'oxydation de la coque et maintenir cette protection pendant toute la durée de vie utile de la plate-forme ;
   - Moyens de surveillance de la tension des chaînes d'ancrage pour la détection à distance d'éventuelles défaillances ou désajustements ;
   - Une station météorologique.

FIG.1

EP 3 895 976 B1

FIG.2

FIG.3

FIG.4

FIG.6

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4982681 A
- CN 109278950
- EP 3196114 A1
- CN 1857961 A
- CN 201347195 Y
- US 2012291685 A1
- US 2012132122 A1
- FR 2970696 A1
- ES 2650275 B1